# FASCICULE DE BREVET EUROPEEN

(11) **EP 1 607 261 B1**
(45) Date de publication et mention de la délivrance du brevet: **03.01.2007**
(21) Numéro de dépôt: 05290974.4
(22) Date de dépôt: 04.05.2005
(51) Int. Cl.: B60K 15/05

(54) **Trappe obturatrice pour une carrosserie d'un véhicule automobile et véhicule automobile comportant une telle trappe**
Abdeckklappe für eine Kraftfahrzeugkarrosserie und Kraftfahrzeug mit einer derartigen Abdeckklappe
Obturator for a motor vehicle body, and motor vehicle equipped with such an obturator

(30) Priorité: 14.06.2004 FR 0406410
(43) Date de publication de la demande: 21.12.2005
(73) Titulaire: Peugeot Citroën Automobiles S.A., 78140 Vélizy Villacoublay (FR)
(72) Inventeur: Renou, David Jean-Francois, 78180 Montigny Le Bretonneux (FR)
(74) Mandataire: Thinat, Michel

(56) Documents cités:
- EP-A1- 0 806 317
- DE-A1- 3 212 689
- DE-A1- 19 827 194
- US-A- 4 527 825

## Description

L'invention concerne une trappe obturatrice pour une carrosserie d'un véhicule automobile ainsi qu'un véhicule automobile comportant une telle trappe.

Un bon nombre de véhicules automobiles, notamment les véhicules dits voitures de tourisme, comprennent dans la carrosserie une ouverture dans laquelle aboutit, venant de l'intérieur de la carrosserie, un conduit relié à un réservoir de carburant. Cette ouverture est obturée moyennant un volet dont la forme est adaptée à celle de la carrosserie et qui est monté pivotant autour d'un axe. Le volet ainsi monté peut pivoter entre une première position dans laquelle le volet obture l'ouverture dans la carrosserie et une seconde position dans laquelle l'accès au conduit venant du réservoir de carburant est libre.

D'autres véhicules automobiles, notamment des véhicules industriels, sont équipés d'une trappe destinée à respectivement obturer et donner accès à une commande d'un outil de travail hydraulique ou d'un hayon élévateur.

Pour protéger l'accès à ce conduit ou cette commande contre des personnes malveillantes, le volet est bloqué par un verrou lorsqu'il obture l'ouverture dans la carrosserie. Pour débloquer le volet, le verrou est actionné par exemple par un câble venant de l'intérieur du véhicule ou moyennant une commande à actionneur électrique couplée ou non au déverrouillage des portes du véhicule.

Pour libérer l'accès au conduit venant du réservoir de carburant lorsque le volet est débloqué, plusieurs conceptions de la trappe obturatrice ont déjà été proposée. Selon des conceptions les plus simples, le volet lui-même ou le bord de l'ouverture dans la carrosserie est conformé de l'une ou de l'autre de différentes manières afin qu'un utilisateur du véhicule puisse glisser au moins un doigt entre le volet et le bord de l'ouverture le temps que le volet est encore en position fermée et tirer sur le volet afin de le pivoter en position ouverte.

Selon une conception améliorée, la trappe comprend un moyen de rappel, en général un ressort, disposé de manière que le volet, lorsqu'il vient d'être déverrouillé, est amené dans une position entrouverte rendant plus facile à un utilisateur du véhicule de glisser au moins un doigt entre le volet et le bord de l'ouverture et de tirer sur le volet afin de le pivoter en position ouverte.

Une telle conception améliorée est décrite, par exemple, dans le document EP-A-0 803 393. Selon cette conception, un ressort est disposé sur la face intérieure du volet d'une trappe obturatrice, proche d'un crochet destiné à être retenu par le pêne d'un verrou de la trappe le temps que le volet est verrouillé. Le ressort prend appui sur le verrou et est comprimé le temps que le volet est en position fermée. Lorsque le volet est déverrouillé, le ressort se détend et pousse par cela le volet dans une position entrouverte.

Cependant, le document EP-A-0 803 393 ne décrit pas de moyens permettant d'ouvrir le volet entièrement, à l'exception des doigts d'une main, ni de moyens permettant de maintenir le volet en position entièrement ouverte.

Selon une conception davantage améliorée, par exemple celle décrite dans le document DE-A-32 12 689, la trappe obturatrice comprend deux moyens différents dont un est un moyen de rappel destiné à mouvoir le volet de la position fermée vers une position entrouverte. Lorsque l'utilisateur du véhicule saisit le volet pour l'ouvrir entièrement, le second moyen, une broche en forme de manivelle, ouvre le volet entièrement et maintient le volet dans la position ouverte.

Un autre exemple pour une trappe obturatrice davantage améliorée est décrit dans le document EP-A-0 806 317 qui décrit l'état de la technique le plus proche. Cette trappe comprend un ressort et une broche en forme d'un U, une moitié de la broche servant comme axe de pivotement de la trappe et l'autre moitié servant comme axe de pivotement décalé du ressort.

Toutes les trappes obturatrices pouvant prendre une position entrouverte emploient donc plusieurs moyens pour mouvoir le volet de la trappe de la position fermée respectivement dans la position entrouverte et dans la position ouverte. Ces conceptions occasionnent un coût de fabrication et un temps de montage importants.

Aussi, le but de l'invention est de proposer une trappe obturatrice de conception simple et ayant un nombre réduit de pièces.

Le but de l'invention est atteint avec une trappe obturatrice pour une carrosserie d'un véhicule automobile, la trappe comprenant un volet d'obturation monté pivotant autour d'un premier axe fixe, et un moyen de rappel agissant sur le volet.

Dans la trappe de l'invention, le moyen de rappel est monté pivotant autour d'un deuxième axe fixe et relié au volet par un troisième axe qui, lui, est mobile, de manière que le moyen de rappel puisse pivoter entre au moins trois positions distinctes, à savoir une première position correspondant à un premier état de contrainte du moyen de rappel et une position fermée du volet d'obturation, le troisième axe étant situé d'un côté d'une ligne droite reliant le premier axe au deuxième axe, une deuxième position correspondant à un état neutre de contrainte du moyen de rappel et une position entrouverte du volet d'obturation, et une troisième position correspondant à un deuxième état de contrainte, différent du premier, du moyen de rappel et une position ouverte du volet d'obturation, le troisième axe étant situé de l'autre côté de la ligne droite reliant le premier axe au deuxième axe.

La trappe obturatrice selon l'invention est conçue de manière à n'utiliser qu'un seul moyen, en l'occurrence un moyen de rappel, et à l'agencer de manière que la position du moyen de rappel dans laquelle il est sollicité le moins ou, de préférence, pas du tout, où il est donc dans un état neutre de contrainte, est celle où le volet est entrouvert. La position fermée du volet est alors obtenue en octroyant une première contrainte au moyen de rappel et la position entièrement ouverte est obtenue en octroyant au moyen de rappel une deuxième contrainte, différente de la première.

Dans le cadre de la présente invention, le terme « moyen de rappel » englobe indifféremment les ressorts à traction, les ressorts à compression, les ressorts à torsion et tout autre moyen élastiquement extensible ou compressible produisant un effet de rappel. Pour simplifier la description de l'invention, tous les modes de réalisation de l'invention sont décrits avec, comme moyen de rappel, un ressort.

La trappe selon l'invention peut être conçue essentiellement selon trois conceptions différentes, qui se distinguent plus particulièrement par la position, par rapport au volet, de l'axe autour duquel le volet pivote. Selon la première conception, l'axe est situé très proche de, ou même sur, le bord du volet, à la manière de l'axe d'une charnière de porte.

Selon la deuxième conception, le volet est pourvu d'un bras dit « col de cygne », ce qui situe l'axe à une certaine distance du volet et fait que le volet, lorsqu'il est pivoté, se meut entièrement à l'extérieur de la carrosserie du véhicule.

Et selon la troisième conception, le volet est pourvu d'un bras court fixé à l'intérieur du pourtour du volet et à une distance de celui-ci, ce qui décale l'axe vers l'intérieur du volet et fait qu'une partie du volet, lorsqu'il est pivoté, se meut à l'intérieur et l'autre partie à l'extérieur de la carrosserie du véhicule.

Les modes de réalisation de la trappe de l'invention décrits ci-après relèvent de la deuxième conception.

La trappe de l'invention a, selon le mode de réalisation choisi, aussi l'une au moins des caractéristiques ci-après, considérées isolément ou selon toute combinaison techniquement possible :
- le moyen de rappel est un ressort ; selon une solution alternative, le moyen de rappel peut également être un corps massif élastiquement déformable ;
- le moyen de rappel est un ressort conformé pour pouvoir être sollicité aussi bien en torsion qu'en compression ;
- le moyen de rappel est un ressort conformé pour pouvoir être sollicité aussi bien en allongement qu'en compression ;
- le moyen de rappel est un ressort en S ;
- le moyen de rappel est un ressort hélicoïdal ;
- la trappe comprend un élément de verrouillage destiné au verrouillage du volet d'obturation, lorsque celui-ci se trouve en position fermée ;
- l'élément de verrouillage est un moyen pouvant être actionné électriquement à distance ;
- l'élément de verrouillage est un moyen pouvant être actionné depuis l'intérieur du véhicule automobile ;
- la trappe comprend un boîtier ayant une paroi circonférentielle avec un support destiné à recevoir une de deux extrémités opposées du moyen de rappel, l'autre extrémité du moyen de rappel étant attachée au volet d'obturation ;
- le support forme un appui pour l'extrémité correspondante du moyen de rappel et constitue pour cette extrémité un palier comportant le deuxième axe de pivotement du moyen de rappel ;
- le support est pourvu d'un perçage destiné à recevoir l'extrémité correspondante du moyen de rappel et à constituer pour cette extrémité un palier comportant le deuxième axe de pivotement du moyen de rappel ;
- la trappe comporte un bras ayant une première extrémité solidaire du volet d'obturation et une seconde extrémité attachée au premier axe de pivotement du volet d'obturation ;
- le bras est pourvu d'au moins une ailette comportant un perçage destiné à recevoir l'extrémité correspondante du moyen de rappel et à constituer le troisième axe de pivotement du moyen de rappel ;
- le bras est pourvu d'une nervure destinée à octroyer une contrainte de torsion au moyen de rappel ;
- lorsque le volet est fermé, il est maintenu dans cet état par un actionneur comportant un pêne et pouvant être commandé par exemple depuis l'habitacle du véhicule.

D'autres caractéristiques et avantages de la présente invention ressortiront de la description ci-après de deux modes de réalisation de la trappe de l'invention. La description est faite en référence aux dessins dans lesquels :
- les figures 1 et 2 montrent la trappe de l'invention selon un premier mode de réalisation respectivement avec le volet fermé et le volet entrouvert ;
- la figure 3 montre l'évolution du troisième axe de la trappe de l'invention selon le premier mode de réalisation, en fonction de la position du volet ;
- la figure 4 montre l'évolution du troisième axe de la trappe de l'invention selon un second mode de réalisation, en fonction de la position du volet ;
- les figures 5 et 6 montrent deux variantes d'un support pour le moyen de rappel de la trappe de l'invention ; et
- les figures 7 et 8 montrent des détails de la disposition du moyen de rappel de la trappe de l'invention selon le second mode réalisation.

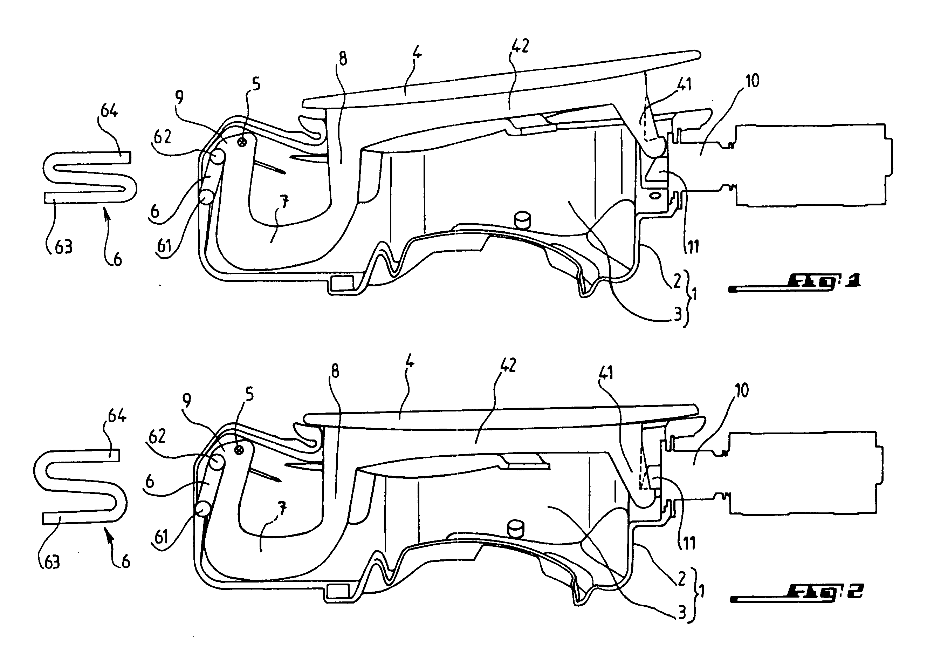

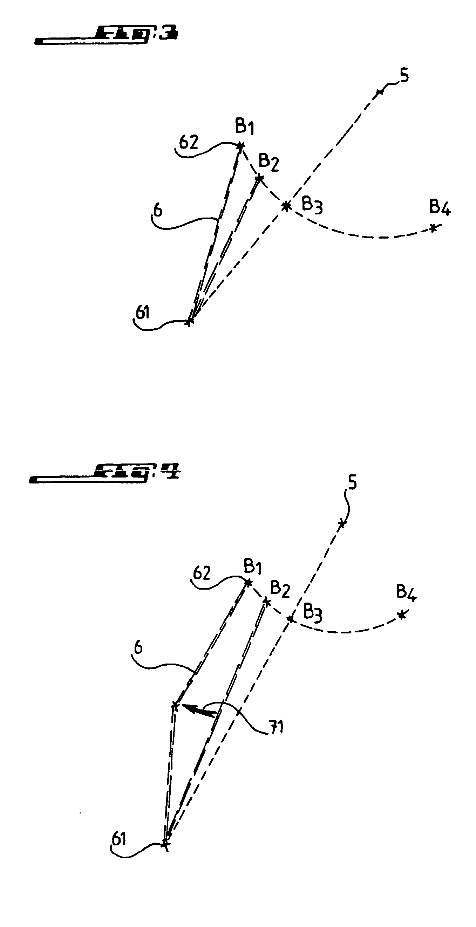

La trappe obturatrice de l'invention, selon le mode de réalisation représentée sur les figures 1 et 2, comporte un boîtier 1 ayant une paroi circonférentielle 2 correspondant essentiellement à l'ouverture dans la carrosserie et une paroi de fond 3 délimitant la trappe en profondeur.

La trappe comprend par ailleurs un volet d'obturation 4 monté pivotant autour d'un premier axe 5 et un ressort 6 destiné à agir sur un bras 7 arqué ayant une première extrémité 8 solidaire du volet 4 et une seconde extrémité 9 comportant un logement pour l'axe 5. Le ressort 6 est monté pivotant sur la paroi circonférentielle 2 moyennant un deuxième axe 61 et sur le bras 7 moyennant un troisième axe 62. Le volet 4 est ainsi monté de manière que le troisième axe 62 puisse être déplacé entre une première position B1 correspondant au volet fermé, une deuxième position B2 correspondant au volet entrouvert, et une troisième position B4 correspondant au volet entièrement ouvert. Le déplacement entre la deuxième et la troisième positions, quel qu'en soit le sens de mouvement, fait passer le troisième axe par une position transitoire B3.

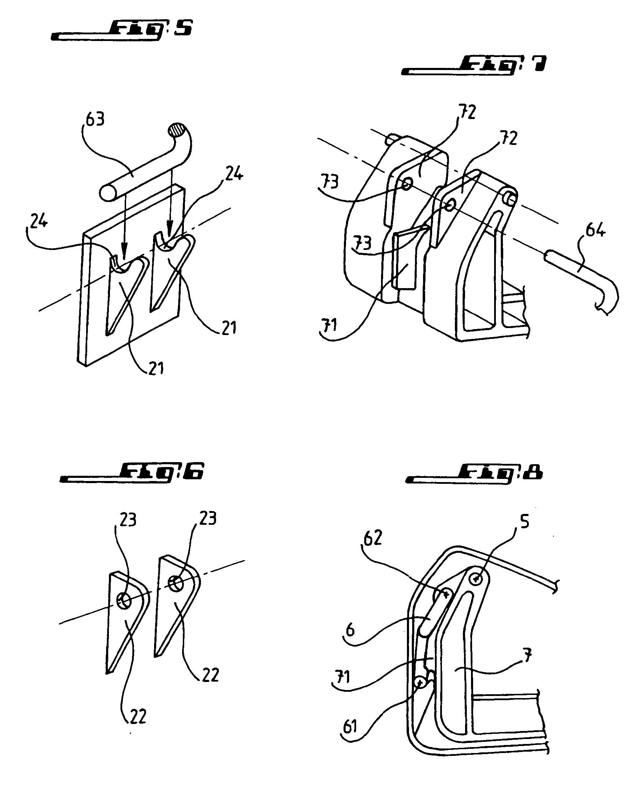

Le ressort 6 de la trappe de l'invention est un ressort en forme d'un S ayant deux extrémités 63, 64. L'extrémité 63 est disposée à l'intérieur de la trappe sur un support 21 représenté sur la figure 5 ou monté sur un support 22 représenté sur la figure 6, et l'extrémité 64 est attachée au bras 7 moyennant le troisième axe 62.

Lorsque la trappe obturatrice est fermée, le volet 4 est maintenu dans sa position fermée, à l'encontre de la force de rappel du ressort 6, par un loqueteau 11 d'un moyen de verrouillage 10 coopérant à cet effet avec un doigt de verrouillage 41 disposé sur une face intérieure du volet 4 : Lors de la fermeture de la trappe, le doigt de verrouillage 41 est bloqué par encliquetage derrière le loqueteau 11 et, inversement, pour débloquer le volet 4, le loqueteau 11 est rétracté pour libérer le doigt de verrouillage 41. Le moyen de verrouillage 10 est commandé électriquement ou, de l'intérieur du véhicule, par un câble.

Lors de la fermeture de la trappe de l'invention, le mouvement du volet 4 octroie au ressort 6 un premier état de contrainte caractérisé par un allongement élastique du ressort.

Lors de l'ouverture de la trappe de l'invention, lorsque le loqueteau 11 vient d'être rétracté et le doigt de verrouillage 41 ainsi libéré, le ressort 6 se détend en reprenant sa longueur ou forme hors contrainte. Cette relaxation du ressort 6 a pour effet que le volet 4 est légèrement pivoté de la position fermée vers une position entrouverte.

Pour ouvrir la trappe obturatrice entièrement, le volet 4 doit être pivoté de la position entrouverte vers une position ouverte. A cet effet, l'utilisateur du véhicule saisit le volet 4 et le fait poursuivre le mouvement qui l'a conduit de la position fermée jusqu'à la position entrouverte. Cette poursuite du mouvement déplace l'axe 62 de la position B2 correspondant à la position entrouverte du volet, d'abord vers la position transitoire B3 en soumettant le ressort 6 à une contrainte différente de la première.

En effet, alors que le ressort 6 est soumis à un allongement le temps que le volet 4 est fermé, le ressort 6 est soumis à une compression lorsque l'on commence à ouvrir entièrement le volet 4. Cette compression augmente jusqu'à ce que le troisième axe 62 atteigne la position B3 située sur la droite reliant le deuxième axe 61 avec le premier axe 5. Au delà de cette position B3, appelée position transitoire parce que l'axe 62 ne reste pas sur cette position mais poursuit son mouvement, le ressort 6 se détend à nouveau jusqu'à ce que l'axe 62 atteigne la troisième position B4 correspondant d'une part à la position ouverte du volet 4 et d'autre part au deuxième état de contrainte du ressort 6.

La position B3 étant relativement proche de la position B2, une impulsion légère de l'utilisateur du véhicule suffit pour amorcer l'ouverture du volet 4. La figure 4 montre l'évolution du troisième axe 62 entre les différentes positions B1 à B4.

Conformément au principe de la présente invention, une réalisation alternative consisterait à disposer le ressort par exemple au dessus de l'axe 62 (dans la disposition représentée sur la figure 1). Dans ce cas, le ressort serait comprimé le temps que le volet est fermé et il est allongé lors de l'ouverture du volet.

Quel que soit le mode de réalisation choisi, le ressort est soumis à un premier état de contrainte lorsque le volet est fermé et ce même ressort est soumis ensuite à un deuxième état de contrainte, différent du premier au moins en ce qui concerne la nature de la contrainte, mais souvent aussi en ce qui concerne la force de la contrainte, lorsque le volet est entièrement ouvert.

En d'autres termes : les déplacements du volet entre les trois positions fermée, entrouverte et entièrement ouverte, quel qu'en soit leur sens de mouvement, sont obtenus moyennant un moyen unique, en l'occurrence un moyen de rappel unique sous la forme du seul ressort 6.

La figure 3 représente l'évolution du troisième axe 62, c'est-à-dire son déplacement entre la première position B1, la deuxième position B2, la position transitoire B3 et la troisième position B4, de manière schématisée. On y remarque plus particulièrement la proximité des positions B1 à B3 entre elles et la position éloignée B4. De même, on y remarque, d'une part comme indiqué plus haut, que la position transitoire B3 est située sur la ligne droite reliant les deux axes fixes 5 et 61, et d'autre part que la distance entre le deuxième axe 61 et le troisième axe 62 décroît en passant de la position B1 jusqu'à la position B3 est qu'elle augmente ensuite jusqu'à la position B4. La position B3 constitue ainsi un point de retour pour l'envergure ou la force de la deuxième contrainte avant d'atteindre, à la position B4, le deuxième état de contrainte qui est déterminé, comme le premier, par la nature de la contrainte et son envergure.

La figure 4 représente l'évolution du troisième axe 62, c'est-à-dire son déplacement entre la première position B1, la deuxième position B2, la position transitoire B3 et la troisième position B4, de manière schématisée pour un second mode de réalisation de la trappe obturatrice de l'invention. Puisque ce second mode de réalisation est, à première vue, très proche du premier, la représentation schématique passe cette fois-ci avant la représentation de la réalisation matérielle. De plus, la trappe de l'invention selon le second mode de réalisation ne différant de la trappe selon le premier mode de réalisation essentiellement que par une pièce supplémentaire, les dessins se limitent, quant au second mode de réalisation, à la représentation de cette différence.

Ainsi, la trappe obturatrice selon le second mode de réalisation comprend un ressort 6 monté pivotant autour du deuxième axe 61 et attaché au bras 7 du volet 4 par le troisième axe 62. Le bras 7 est monté pivotant autour de l'axe 5. Lorsque le volet 4 est en position fermée, le troisième axe 62 est en position B1 et lorsque le volet 4 est en position entièrement ouverte, le troisième axe 62 est en position B4. Et B2 désigne la position de l'axe 62 lorsque le volet 4 est en position entrouverte. Jusqu'ici, le second mode de réalisation correspond au premier.

La figure 4 montre cependant que le ressort 6 est plié lorsque le volet 4 est en position fermée de la trappe et le troisième axe 62 se trouve dans la position B1, ce qui n'est pas le cas dans la disposition du premier mode de réalisation.

En effet, le second mode de réalisation diffère du premier par la présence d'une nervure 71 sur le bras 7, la nervure étant disposée sur la face arrière du bras 7 et en regard au support 21 ou 22 du ressort 6. Ainsi, lorsque le volet 4 est poussé vers la position fermée, la nervure 71 devance la face correspondante du bras 7 d'une mesure suffisante pour octroyer au ressort 6 une contrainte transversale indiquée sur la figure 4 par une flèche et le numéro de référence 71 de la nervure, cette contrainte transversale conduisant au pliage du ressort 6.

Lorsque le volet 4 est en position fermée, le troisième axe 62 est en position B1 et le ressort 6 est donc plié par la nervure 71.

Lorsque le volet 4 vient d'être déverrouillé, le ressort 6 se détend en se redressant pendant que l'axe 62 avance vers la position B2. Et le volet 4 se trouve alors en position entrouverte, lorsque la contrainte transversale est annulée et l'axe 62 avancé vers la position B2.

L'ouverture entière de la trappe à partir du volet 4 entrouvert est ensuite obtenue de la même façon qu'avec une trappe selon le premier mode de réalisation.

Le second mode de réalisation diffère ainsi du premier mode de réalisation par le fait que la première contrainte est une contrainte supplémentaire, indépendante de la seconde. La première contrainte n'est donc pas de nature opposée par rapport à la seconde contrainte, comme dans le premier mode.

Les figures 5 à 8, et plus particulièrement les figures 7 et 8, montrent les éléments de la trappe obturatrice selon le second mode de réalisation de l'invention.

Les figures 5 et 6 montrent respectivement le support 21 et le support 22 pour l'extrémité 63 du ressort 6. Le support 21, qui est avantageusement utilisé par paire, est pourvu d'une excavation 24 formant un appui pour l'extrémité 63 du ressort 6. Le support 21 est simple à réaliser, notamment lorsqu'il s'agit de former la paroi circonférentielle 2 du boîtier 1 par moulage en une seule pièce avec les deux supports 21. Du fait que le support 21 ne prête qu'un appui au ressort 6, le ressort 6 n'est monté que du côté de son extrémité 64 sur le bras 7.

Le support 22, par contre, permet de monter le ressort 6 par ses deux extrémités 63 et 64, en présentant un orifice 23 dans lequel l'extrémité 63 du ressort 6 peut être introduite. Le support 22 est utilisé avantageusement par paire.

Les supports 21 et 22 peuvent être utilisés également pour la trappe selon le premier mode de réalisation.

La figure 7 montre la face arrière du bras 7. On y voit plus particulièrement deux ailettes 72 dont chacune est pourvue d'un orifice 73 destiné à recevoir l'extrémité 64 du ressort 6. La face arrière du bras 7 est pourvue par ailleurs de la nervure 71 décrite plus haut.

La figure 8 montre l'effet obtenu moyennant la nervure 71 lorsque le volet 4 est en position fermée.

## Revendications

1. Trappe obturatrice pour une carrosserie d'un véhicule automobile, la trappe comprenant un volet d'obturation (4) monté pivotant autour d'un premier axe fixe (5) et un moyen de rappel (6) agissant sur le volet (4),
**caractérisée en ce que**
le moyen de rappel (6) est monté pivotant autour d'un deuxième axe fixe (61) et relié au volet (4) par un troisième axe mobile (62), de manière que
le moyen de rappel (6) puisse pivoter entre au moins trois positions distinctes (B1, B2, B3), à savoir
une première position (B1) correspondant à un premier état de contrainte du moyen de rappel (6) et une position fermée du volet d'obturation (4), le troisième axe (62) étant situé d'un côté d'une ligne droite reliant le premier axe (5) au deuxième axe (61),
une deuxième position (B2) correspondant à un état neutre de contrainte du moyen de rappel (6) et une position entrouverte du volet d'obturation (4), et
une troisième position (B4) correspondant à un deuxième état de contrainte, différent du premier, du moyen de rappel (6) et une position ouverte du volet d'obturation (4), le troisième axe (62) étant situé de l'autre côté de la ligne droite reliant le premier axe (5) au deuxième axe (61).

2. Trappe selon la revendication 1, **caractérisée en ce que** le moyen de rappel (6) est un ressort.

3. Trappe selon la revendication 1 ou 2, **caractérisée en ce que** le moyen de rappel (6) est un ressort conformé pour supporter des contraintes en torsion et des contraintes en compression.

4. Trappe selon la revendication 1 ou 2, **caractérisée en ce que** le moyen de rappel (6) est un ressort conformé pour supporter des contraintes en allongement et des contraintes en compression.

5. Trappe selon l'une quelconque des revendications 1 à 4, **caractérisée en ce que** le moyen de rappel (6) est un ressort en S.

6. Trappe selon l'une quelconque des revendications 1 à 5, **caractérisée en ce que** le moyen de rappel (6) est un ressort hélicoïdal.

7. Trappe selon l'une quelconque des revendications 1 à 6, **caractérisée en ce qu'**elle comprend un élément de verrouillage (20) destiné au verrouillage du volet d'obturation (4), lorsque celui-ci se trouve en position fermée.

8. Trappe selon la revendication 7, **caractérisée en ce que** l'élément de verrouillage (10) est un moyen pouvant être actionné à distance.

9. Trappe selon la revendication 7, **caractérisée en ce que** l'élément de verrouillage (10) est un moyen pouvant être actionné depuis l'intérieur du véhicule automobile.

10. Trappe selon l'une quelconque des revendications 1 à 9, **caractérisée en ce qu**'elle comprend un boîtier (1) ayant une paroi circonférentielle (2) avec un support (21, 22) destiné à recevoir une (63) de deux extrémités opposées (63, 64) du moyen de rappel (6), l'autre extrémité (64) du moyen de rappel (6) étant attachée au volet d'obturation (4).

11. Trappe selon la revendication 10, **caractérisée en ce que** le support (21) forme un appui pour l'extrémité correspondante (63) du moyen de rappel (6) et constitue pour cette extrémité (63) un palier comportant le deuxième axe (61) de pivotement du moyen de rappel (6).

12. Trappe selon la revendication 10, **caractérisée en ce que** le support (22) est pourvu d'un perçage (23) destiné à recevoir l'extrémité correspondante (63) du moyen de rappel (6) et à constituer pour cette extrémité (63) un palier comportant le deuxième axe (61) de pivotement du moyen de rappel (6).

13. Trappe selon l'une quelconque des revendications 1 à 12, **caractérisée en ce qu'**elle comporte un bras (7) ayant une première extrémité (8) solidaire du volet d'obturation (4) et une seconde extrémité (9) attachée au premier axe de pivotement (5) du volet d'obturation (4).

14. Trappe selon la revendication 13, **caractérisée en ce que** le bras (7) est pourvu d'au moins une ailette (72) comportant un perçage (73) destiné à recevoir l'extrémité correspondante (64) du moyen de rappel (6) et à constituer le troisième axe (62) de pivotement du moyen de rappel (6).

15. Trappe selon la revendication 13 ou 14, **caractérisée en ce que** le bras (7) est pourvu d'une nervure (71) destinée à octroyer une contrainte de torsion au moyen de rappel (6).

16. Véhicule automobile ayant une carrosserie, **caractérisé en ce qu**'il comprend une trappe selon l'une quelconque des revendications 1 à 15.

## Claims

1. A closure lid for a body of a motor vehicle, the lid comprising a closure flap (4) pivotally mounted around a first fixed axis (5) and return means (6) acting on the flap (4),
**characterized in that**
the return means (6) is pivotally mounted around a second fixed axis (61) and connected to the flap (4) by a third mobile axis (62), so that
the return means (6) may pivot between at least three distinct positions (B1, B2, B3), i.e.
a first position (B1) corresponding to a first constrained state of the return means (6) and a closed position of the closure flap (4), the third axis (62) being located on one side of a straight line connecting the first axis (5) to the second axis (61),
a second position (B2) corresponding to a neutral stressed state of the return means (6) and a half-open position of the closure flap (4), and
a third position (B4) corresponding to a second stressed state, different from the first, of the return means (6) and an open position of the closure flap (4), the third axis (62) being located on the other side of the straight line connecting the first axis (5) to the second axis (61).

2. The lid according to claim 1, **characterized in that** the return means (6) is a spring.

3. The lid according to claim 1 or 2, **characterized in that** the return means (6) is a conformed spring in order to withstand torsional stresses and compressional stresses.

4. The lid according to claim 1 or 2, **characterized in that** the return means (6) is a conformed spring in order to withstand elongational stresses and compressional stresses.

5. The lid according to any of claims 1 to 4, **characterized in that** the return means (6) is an S-shaped spring.

6. The lid according to any of claims 1 to 5, **characterized in that** the return means (6) is a helical spring.

7. The lid according to any of claims 1 to 6, **characterized in that** it comprises a lock member (20) for locking the closure flap (4), when the latter is in the closed position.

8. The lid according to claim 7, **characterized in that** the lock member (10) is a means which may be actuated from a distance.

9. The lid according to claim 7, **characterized in that** the lock member (10) is a means which may be actuated from inside the motor vehicle.

10. The lid according to any of claims 1 to 9, **characterized in that** it comprises a casing (1) having a circumferential wall (2) with a support (21, 22) for receiving one (63) of two opposite ends (63, 64) of the return means (6), the other end (64) of the return means (6) being attached to the closure flap (4).

11. The lid according to claim 10, **characterized in that** the support (21) forms a support area for the corresponding end (63) of the return means (6) and forms for this end (63) a bearing including the second pivot axis (61) of the return means (6).

12. The lid according to claim 10, **characterized in that** the support (22) is provided with a bore (23) for receiving the corresponding end (63) of the return means (6) and for forming for this end (63) a bearing including the second pivot axis (61) of the return means (6).

13. The lid according to any of claims 1 to 12, **characterized in that** it includes an arm (7) with a first end (8) integral with the closure flap (4) and a second end (9) attached to the first pivot axis (5) of the closure flap (4).

14. The lid according to claim 13, **characterized in that** the arm (7) is provided with at least one fin (72) including a bore (73) for receiving the corresponding end (64) of the return means (6) and for forming the third pivot axis (62) of the return means (6).

15. The lid according to claim 13 or 14, **characterized in that** the arm (7) is provided with a rib (71) for imparting a torsional stress to the return means (6).

16. A motor vehicle with a body, **characterized in that** it comprises a lid according to any of claims 1 to 15.

## Patentansprüche

1. Verschlussklappe für eine Karosserie eines Kraftfahrzeugs, wobei die Klappe einen Verschlussladen (4) umfasst, der schwenkbar um eine erste starre Achse (5) montiert ist, und ein Rückholmittel (6), das auf den Laden (4) wirkt,
**dadurch gekennzeichnet, dass**
das Rückholmittel (6) schwenkbar um eine zweite starre Achse (61) montiert und mit den Laden (4) durch eine dritte bewegliche Achse (62) verbunden ist, so dass
das Rückholmittel (6) zwischen mindestens drei verschiedenen Stellungen (B1, B2, B3) schwenkbar ist, nämlich
einer ersten Stellung (B1), die einem ersten Beanspruchungszustand des Rückholmittels (6) und einer geschlossenen Stellung des Verschlussladens (4) entspricht, wobei sich die dritte Achse (62) an einer Seite einer geraden Linie befindet, welche die erste Achse (5) mit der zweiten Achse (61) verbindet,
einer zweiten Stellung (B2), die einem neutralen Beanspruchungszustand des Rückholmittels (6) und einer halb geöffneten Stellung des Verschlussladens (4) entspricht, und
einer dritten Stellung (B4), die einem zweiten Beanspruchungszustand des Rückholmittels (6) entspricht, der sich vom ersten unterscheidet, und einer geöffneten Stellung des Verschlussladens (4), wobei sich die dritte Achse (62) an der anderen Seite der geraden Linie befindet, welche die erste Achse (5) mit der zweiten Achse (61) verbindet.

2. Klappe nach Anspruch 1, **dadurch gekennzeichnet, dass** das Rückholmittel (6) eine Feder ist.

3. Klappe nach Anspruch 1 oder 2, **dadurch gekennzeichnet, dass** das Rückholmittel (6) eine Feder ist, die derart gestaltet ist, um Verdrehungs- und Kompressionsbeanspruchungen standzuhalten.

4. Klappe nach Anspruch 1 oder 2, **dadurch gekennzeichnet, dass** das Rückholmittel (6) eine Feder ist, die derart gestaltet ist, um Dehnungs- und Kompressionsbeanspruchungen standzuhalten.

5. Klappe nach einem der Ansprüche 1 bis 4, **dadurch gekennzeichnet, dass** das Rückholmittel (6) eine S-förmige Feder ist.

6. Klappe nach einem der Ansprüche 1 bis 5, **dadurch gekennzeichnet, dass** das Rückholmittel (6) eine Spiralfeder ist.

7. Klappe nach einem der Ansprüche 1 bis 6, **dadurch gekennzeichnet, dass** sie ein Verriegelungselement (20) umfasst, das zum Verriegeln des Verschlussladens (4) bestimmt ist, wenn sich dieser in geschlossener Stellung befindet.

8. Klappe nach Anspruch 7, **dadurch gekennzeichnet, dass** das Verriegelungselement (10) ein aus der Entfernung bedienbares Mittel ist.

9. Klappe nach Anspruch 7, **dadurch gekennzeichnet, dass** das Verriegelungselement (10) ein vom Innenraum des Fahrzeugs bedienbares Mittel ist.

10. Klappe nach einem der Ansprüche 1 bis 9, **dadurch gekennzeichnet, dass** sie ein Gehäuse (1) mit einer Umfangswand (2) mit einem Halter (21, 22) umfasst, der dazu bestimmt ist, eines (63) der zwei gegenüberliegenden Enden (63, 64) des Rückholmittels (6) aufzunehmen, wobei das andere Ende (64) des Rückholmittels (6) am Verschlussladen (4) befestigt ist.

11. Klappe nach Anspruch 10, **dadurch gekennzeichnet, dass** der Halter (21) eine Abstützung für das entsprechende Ende (63) des Rückholmittels (6) bildet und für dieses Ende (63) ein Lager bildet, welches die zweite Schwenkachse (61) des Rückholmittels (6) umfasst.

12. Klappe nach Anspruch 10, **dadurch gekennzeichnet, dass** der Halter (22) mit einer Bohrung (23) versehen ist, die dazu bestimmt ist, das entsprechende Ende (63) des Rückholmittels (6) aufzunehmen und für dieses Ende (63) ein Lager zu bilden, welches die zweite Schwenkachse (61) des Rückholmittels (6) umfasst.

13. Klappe nach einem der Ansprüche 1 bis 12, **dadurch gekennzeichnet, dass** sie einen Arm (7) umfasst, der ein erstes, mit dem Verschlussladen (4) verbundenes Ende (8) und ein zweites, mit der ersten Schwenkachse (5) des Verschlussladens (4) verbundenes Ende (9) hat.

14. Klappe nach Anspruch 13, **dadurch gekennzeichnet, dass** der Arm (7) mit mindestens einem Flügel (72) ausgestattet ist, der eine Bohrung (73) umfasst, die dazu bestimmt ist, das entsprechende Ende (64) des Rückholmittels (6) aufzunehmen und die dritte Schwenkachse (62) des Rückholmittels (6) zu bilden.

15. Klappe nach Anspruch 13 oder 14, **dadurch gekennzeichnet, dass** der Arm (7) mit einer Rippe (71) ausgestattet ist, die dazu bestimmt ist, auf das Rückholmittel (6) eine Verdrehungsbeanspruchung auszuüben.

16. Kraftfahrzeug mit einer Karosserie, **dadurch gekennzeichnet, dass** es eine Klappe nach einem der Ansprüche 1 bis 15 umfasst.
